# EUROPÄISCHE PATENTSCHRIFT

(11) **EP 1 670 631 B1**
(45) Veröffentlichungstag und Bekanntmachung des Hinweises auf die Patenterteilung: **09.12.2009**
(21) Anmeldenummer: 04765870.3
(22) Anmeldetag: 07.10.2004
(51) Int. Cl.: B29C 47/06, B29C 44/24

(54) **VERFAHREN UND VORRICHTUNG ZUR HERSTELLUNG EINER AUS MINDESTENS ZWEI SCHAUMKUNSTSTOFFSCHICHTEN BESTEHENDEN FOLIE**
METHOD AND DEVICE FOR PRODUCING A FILM MADE OF AT LEAST TWO PLASTIC FOAM LAYERS
PROCEDE ET DISPOSITIF POUR PRODUIRE UN FILM CONSTITUE D'AU MOINS DEUX COUCHES DE MOUSSE SYNTHETIQUE

(30) Priorität: 08.10.2003 DE 10346708
(43) Veröffentlichungstag der Anmeldung: 21.06.2006
(73) Patentinhaber: Silver-Plastics GmbH & Co. KG, 53842 Troisdorf (DE)
(72) Erfinder: HOMER, Stephan, 66663 Merzig (DE)
(74) Vertreter: Wagner, Matthias
(86) Internationale Anmeldenummer: PCT/EP2004/011208
(87) Internationale Veröffentlichungsnummer: WO 2005/035219

(56) Entgegenhaltungen:
- WO-A-00/71328
- GB-A- 2 322 100
- US-A- 4 518 557

## Beschreibung

Die Erfindung betrifft ein Verfahren gemäß Anspruch 1 und ein Vorrichtung gemäß Anspruch 7 zur Herstellung einer aus mindestens zwei Schaumkunststoffschichten bestehenden Folie, wie sie beispielsweise zur Ausbildung von Verpackungsschalen und ähnlichen Formgebilden Verwendung finden kann.

Die Ausbildung von mehrschichtigen Folien, bei denen eine Schicht aus einem geschäumten Kunststoff und weitere Schichten aus einem ungeschäumten, d. h. kompakten Kunststoff bestehen, ist vielfältig bekannt. Hierbei werden die ungeschäumten und geschäumten Schaumkunststoffschichten entweder in separaten Arbeitsgängen hergestellt und durch Laminieren oder Kalandrieren zu einer mehrschichtigen Folie verbunden oder aber die geschäumte Kunststoffschicht wird mit den ungeschäumten Kunststoffschichten durch Koextrusion verbunden, wozu beispielhaft auf die WO 00/71328A1 und die US-A-4518557 verwiesen wird. Die WO 00/71328 A1 lehrt ferner auch die Koextrusion von Schaumschichten unmittelbar aufeinanderliegend. Hierzu wird vorgeschlagen, die Temperierung der Schmelzen innerhalb des Koextrusionswerkzeuges vorzunehmen.

Aus der gattungsbildenden DE 43 16 863 A1 ist es darüber hinaus bekannt, eine Folie aus mindestens zwei Schaumkunststoffschichten im sogenannten Koextrusionsverfahren herzustellen, bei welchem zur Ausbildung jeder Schaumkunststoffschicht der Folie zunächst ein thermoplastischer Kunststoff in einem jeweiligen Extruder aufgeschmolzen und mit einem chemischen oder physikalischen Treibmittel begast wird und nachfolgend die solchermaßen hergestellten schäumfähigen Schmelzen separat einer gemeinsamen Koextrusionsdüse zugeführt werden, aus der sie gemeinsam zu der Folie koextrudiert werden. Das bekannte Verfahren zeichnet sich dadurch aus, daß die einzelnen Schaumkunststoffschichten aus schäumfähigen Schmelzen hergestellt werden, die in separaten Extrudern hergestellt und erst unmittelbar in der Koextrusionsdüse zwecks Ausbildung der Folie zusammengeführt werden. Hierbei wird es als vorteilhaft angesehen, daß die zu vereinenden verschäumbaren Polymerschmelzen in ihren Schmelztemperaturen beim Zusammenführen sich nicht allzusehr voneinander unterscheiden, da dann besonders feste Schaumstoffverbunde herstellbar sein sollen.

Insbesondere im Bereich der Herstellung von Verpackungsschalen im Tiefziehverfahren aus mehrschichtigen Folien ist es jedoch wünschenswert, unterschiedliche Eigenschaftsprofile der einzelnen Schaumkunststoffschichten zu erhalten. So ist es beispielsweise aus der Herstellung von Fleischverpackungsschalen wünschenswert, eine Schicht aus offenzelligem Schaumkunststoff, die in der Lage ist, Flüssigkeiten aufzunehmen, in zwei äußere Lagen aus geschlossenzelligem Kunststoff einzulagern, so daß eine flüssigkeitsdichte, gleichzeitig aber saugfähige Folie zur Ausbildung einer mit entsprechenden Eigenschaften ausgestalteten Schale erhalten werden kann.

Die Ausbildung von geschlossenzelligen und offenzelligen Schäumen bedingt jedoch eine voneinander stark abweichende Temperatur der einzelnen schäumfähigen Schmelzen im Moment des Austritts aus der Koextrusionsdüse, wie auch unterschiedliche Rezepturen hierzu benötigt werden.

Aus der GB 2322100 A ist die Kombination von geschlossenzelligen und offenzelligen Schäumen bekannt, die jedoch separat hergestellt und anschließend zu einem Mehrschichtsubstrat zusammengefügt werden, was aufwändig erscheint.

Aus der EP 1 306 191 A2 ist es bekannt, einen von einem Extruder stammenden Schmelzestrom in zwei Teilströme aufzuteilen, anschließend beide Teilströme in getrennten Kühlaggregaten einer unterschiedlichen Abkühlung zu unterwerfen und dann die solchermaßen abgekühlten Schmelzestränge wieder zu einem Gesamtstrom zu vereinigen, bevor dieser vereinigte Gesamtstrom sodann einem Extrusionswerkzeug zugeführt wird. Da der Schmelzestrom jedoch zwingend vor der Zuführung zum Werkzeug wieder vereinigt wird, gestaltet sich die Schichtenausbildung und -variation im Betrieb schwierig und unflexibel.

Aufgabe der Erfindung ist es daher, ein Verfahren der eingangs genannten Art dahingehend weiterzuentwickeln, daß durch unterschiedliche Ausbildung der einzelnen schäumfähigen Schmelzen Schaumkunststoffschichten mit unterschiedlichem Eigenschaftsprofil, etwa unterschiedliche Dichten, Zellstrukturen und Eigenschaften erhalten werden können.

Zur Lösung dieser gestellten Aufgabe schlägt das erfindungsgemäße Verfahren vor, daß jede schäumfähige Schmelze nach ihrem Austritt aus dem jeweiligen Extruder und vor ihrem Eintritt in die Koextrusionsdüse einen Abkühlschritt durchläuft, in welchem die schäumfähigen Schmelzen unabhängig voneinander auf vorbestimmte Temperaturen abgekühlt werden und die solchermaßen abgekühlten schäumfähigen Schmelzen in der Koextrusionsdüse unmittelbar aufeinandergefügt und bei ihrem Austritt aus der Koextrusionsdüse aufgeschäumt werden.

Durch diese Ausbildung des erfindungsgemäßen Verfahrens ist es möglich, in den einzelnen Extrudern mittels gleicher oder unterschiedlicher Rezepturen verschiedene schäumfähige Schmelzen herzustellen und diese nachfolgend unabhängig voneinander auf jeweils vorbestimmte Temperaturen abzukühlen und sodann die solchermaßen temperierten und nach wie vor separat, d. h. unabhängig voneinander geführten Schmelzeströme der Koextrusionsdüse zuzuführen, in welcher sie unmittelbar in der gewünschten Schichtenreihenfolge aufeinandergefügt und in an sich bekannter Weise zur die einzelnen Schaumkunststoffschichten aufweisenden koextrudierten Folie koextrudiert werden. Das Aufeinanderfügen der Schmelzeströme erfolgt somit erfindungsgemäß erst in der Koextrusionsdüse, und zwar kurz vor dem Austritt der Folie aus der Koextrusionsdüse.

An der Austrittsstelle der Koextrusionsdüse erfolgt infolge des einsetzenden Druckabfalls das Aufschäumen des zuvor in die jeweiligen Schmelzeströme injizierten Treibmittels mit der an sich bekannten Ausbildung der jeweiligen zellulären Strukturen, die insbesondere durch die unterschiedlichen einstellbaren Temperaturen der schäumfähigen Schmelzen voneinander abweichende gewünschte Eigenschaften hinsichtlich Zellstruktur, Morphologie, Dichte und weitere Eigenschaften aufweisen.

Auf diese Weise ist es mit dem erfindungsgemäßen Verfahren erstmals möglich, in einem Arbeitsgang mehrschichtige Folien mit mindestens zwei Schaumkunststoffschichten herzustellen, die sich in ihren Eigenschaften voneinander stark unterscheiden. Beispielsweise ist es möglich, mindestens eine Schaumkunststoffschicht mit einer offenzelligen Schaumstruktur und mindestens eine weitere Schaumkunststoffschicht mit einer geschlossenzelligen Schaumstruktur herzustellen.

Zur Ausbildung der Abkühlschritte für jede schäumfähige Schmelze ist bevorzugt ein Kühlaggregat vorgesehen, dessen Kühlleistung in Abhängigkeit von der gewünschten Temperatur der jeweiligen schäumfähigen Schmelze geregelt wird. Auf diese Weise ist eine feinfühlige und individuelle Temperierung einer jeden schäumfähigen Schmelze entsprechend des gewünschten Eigenschaftsprofils möglich.

In einer alternativen Ausführungsform des erfindungsgemäßen Verfahrens kann jedoch zur Ausbildung der Abkühlschritte auch ein gemeinsames Kühlaggregat vorgesehen werden, durch weiches die schäumfähigen Schmelzen gemeinsam, aber getrennt voneinander geführt werden und der Grad der Abkühlung der jeweiligen schäumfähigen Schmelzen durch eine Variation des Massendurchsatzes der jeweiligen schäumfähigen Schmelzen durch das Kühlaggregat pro Zeiteinheit geregelt wird. Die Regelung des Abkühlgrades der jeweiligen schäumfähigen Schmelzen wird ferner durch die Eingangstemperatur und den vorab konstruktiv vorbestimmten Querschnitt des jeweiligen Schmelzekanals mitbestimmt und maßgeblich über die Verweilzeit der Schmelzen, welche sich über die Drehzahl des jeweiligen Extruders oder zusätzlich vorgesehener Schmelzepumpen steuern läßt, vorgegeben, so daß sich eine Variation des Massendurchsatzes einstellt, die letztlich Einfluß auf die erzielte Abkühlung der jeweiligen Schmelzen hat. Im Ergebnis können unterschiedliche Temperaturen der jeweils hergestellten schäumfähigen Schmelzen vor dem Zusammenführen in der Koextrusionsdüse erzielt werden.

Im Sinne der Erfindung können Kunststoff-Rohmaterialien den Extrudern zugeführt werden, die erst während des Aufschmelzens im Extruder durch zusätzliche Einleitung eines gasförmigen Treibmittels in die im Extruder befindliche Kunststoffschmelze begast und somit zu einer schäumfähigen Schmelze umgewandelt werden.

Es ist jedoch auch möglich, bereits in einem vorgezogenen Arbeitsschritt mit Treibmittel beladene Kunststoffgranulate als Rohmaterial zu verwenden und in den Extrudern aufzuschmelzen, so daß unmittelbar schäumfähige Schmelzen vorliegen und auf eine zusätzliche Begasung im Extruder gegebenenfalls verzichtet werden kann.

Das erfindungsgemäße Verfahren ist insbesondere zur Herstellung von Folien auf Basis thermoplastischer Kunststoffe, wie Polyethylen, Polypropylen oder Polyester geeignet, jedoch hierauf nicht beschränkt. Auch Polystyrol ist für die Verarbeitung nach dem erfindungsgemäßen Verfahren gut geeignet.

Die Erfindung betrifft ferner auch eine Vorrichtung zur Herstellung einer aus mindestens zwei Schaumkunststoffschichten bestehenden Folie, die eine der Anzahl an voneinander verschiedenen Schaumkunststoffschichten entsprechende Anzahl Extruder zur Ausbildung schäumfähiger Schmelzen sowie eine den Extrudern nachgeordnete Koextrusionsdüse umfaßt, die mit den Extrudern über jeweilige getrennte Schmelzekanäle verbunden ist und mittels derer die Folie aus den jeweiligen schäumfähigen Schmelzen koextrudierbar ist.

Erfindungsgemäß ist vorgesehen, daß jeder Schmelzekanal einen eigenen Kühlabschnitt aufweist, in welchem die aus den Extrudern austretenden schäumfähigen Schmelzen auf vorbestimmbare Temperaturen entsprechend des vorgesehenen Eigenschaftsprofils abkühlbar sind und die Schmelzekanäle separat voneinander mit der Koextrusionsdüse kommunizieren.

Sofern ein Koextrusionsverbund mit z. B. zwei gleichen Schaumkunststoffschichten A und einer weiteren Schaumkunststoffschicht B in der Schichtenreihenfolge A-B-A erzeugt werden soll, können beide Schaumkunststoffschichten A aus einem ersten Extruder stammen und die Schaumkunststoffschicht B aus einem zweiten Extruder, d. h. trotz dreischichtigen Aufbaus des Verbundes sind zwei Extruder mit entsprechend unabhängigen Kühlabschnitten für die Erzeugung der zwei unterschiedlichen Schaumkunststoffschichten A und B ausreichend. Entsprechendes gilt auch für andere Schichtenfolgen.

Gemäß einer möglichen Ausführungsform der erfindungsgemäßen Vorrichtung ist der Kühlabschnitt jedes Schmelzekanals von einem unabhängig regelbaren Kühlextruder oder einem entsprechend ausgebildeten Wärmetauscher gebildet.

Der Kühlabschnitt kann alternativ auch von einem gemeinsamen Kühlaggregat gebildet sein, durch welches die Schmelzekanäle getrennt voneinander hindurchgeführt sind.

Ferner kann die Vorrichtung wahlweise in den jeweiligen Schmelzekanälen auch Schmelzepumpen zur Förderung der aus den Extrudern austretenden schäumfähigen Schmelzen zur Koextrusionsdüse aufweisen.

Die Koextrusionsdüse selbst kann in an sich bekannter Weise als Rund- oder Flachdüse je nach gewünschter Form der erzielten aus mehreren Schaumkunststoffschichten bestehenden Folie ausgebildet sein. Demzufolge wird ein Verfahren und eine Extrusionsanlage zur Herstellung eines mehrlagigen Verbundes geschäumter Polymere vorgeschlagen, bei dem unterschiedliche Eigenschaften der einzelnen Schichten, beispielsweise absorbierende oder nicht absorbierende Eigenschaften der Schichten im Koextrusionsverfahren erzielbar sind.

Dies geschieht durch eine Überwindung der verfahrenstechnischen Grenzen des sogenannten Integralschaumverfahrens, bei dem durch unterschiedliches Abkühlen des Schaumextrudats im Formgebungsprozeß von innen nach außen unterschiedliche Dichten, Zellstrukturen und Eigenschaften ein und derselben Ausgangsrezeptur erzielt werden.

Gemäß einer Ausführungsform der Erfindung werden zwei oder mehr voneinander unabhängige Extruder mit der Möglichkeit voneinander unabhängiger Rezeptierung vorgesehen, die jeweils eine Kunststoffschmelze in der für thermoplastische Schäume üblichen verfahrenstechnischen Art und Weise erzeugen. In jeden Extruder werden voneinander unabhängig in die plastifizierte Schmelze geeignete Treibmittel injiziert oder aber das Treibmittel wurde bereits vorab inkorporiert. Die Extruder verfügen ferner unabhängig voneinander jeweils über geeignete nachfolgende Kühleinrichtungen für die Schmelze, bevorzugt einen Kühlextruder oder einen Wärmetauscher.

Die Schmelzestränge werden sodann voneinander unabhängig einem Koextrusionswerkzeug zugeführt.

Im Koextrusionswerkzeug erfolgt zu jedem Schmelzestrang zunächst unabhängig eine erste Formgebung, z. B. in die Form eines runden Schlauches bei Ausbildung der Koextrusionsdüse als Runddüse oder in die Form einer Flachbahn bei Ausbildung der Koextrusionsdüse als Flachdüse.

Dabei herrschen in den jeweiligen Schmelzesträngen voneinander unabhängige verfahrenstechnische Bedingungen, insbesondere hinsichtlich Druck, Temperatur, Treibmittel in Lösung etc.

Im weiteren Verlauf fließen alle vorgeformten Schmelzestränge unmittelbar vor dem Verlassen der Koextrusionsdüse in der gewünschten Weise übereinander und bilden einen mehrlagigen Schmelzefilm, der die spätere Folie ausbildet.

An der Austrittsstelle der Koextrusionsdüse erfolgt infolge des einsetzenden Druckabfalls das Aufschäumen der Treibmittel in den Einzelschichten mit der bekannten Ausbildung zellulärer Strukturen, die verursacht durch die unterschiedliche Rezeptierung, Treibmittelbeladung, Druck und das jeweils in den Abkühleinrichtungen hergestellte Temperaturprofil der Einzelschichten dann voneinander abweichende gewünschte Eigenschaften hinsichtlich Zellstruktur, Morphologie, Dichte und weitere Eigenschaften aufweisen.

Nachfolgend wird die erhaltene koextrudierte Folie aus mehreren Schaumkunststoffschichten in an sich bekannter Weise weiter gekühlt und kalibriert, z. B. durch einen Innenkühldorn im Falle der Schlauchextrusion oder durch Kühl- und Kalibrierwalzen im Falle einer Flachextrusion.

Es erfolgt sodann die übliche Weiterbehandlung, d. h. z. B. Schneiden, Wickeln, Nadeln etc.

Wegen der nur kurzen Verweilzeit der unterschiedlichen Schmelzestränge aufeinander innerhalb des Koextrusionswerkzeuges und nur unmittelbar vor der Austrittsstelle desselben kommt es nur zu geringfügigsten Durchmischungen der einzelnen Treibmittelkonzentrationen und Veränderungen der Temperaturen der Einzelschichten, da die Verweilzeit aufeinander bis zum Aufschäumprozeß für eine gegenseitige Angleichung zu gering ist.

Es versteht sich, daß bei Unverträglichkeit bzw. Nichthaften der verschiedenen Ausgangsrezepturen aufeinander eine Zwischenlage in Form z. B. einer kompakten Schicht eines Haftvermittlers über einen weiteren Extruder, der ebenfalls einen separaten Schmelzefilm in das Werkzeug einspeist, eingebracht werden kann. In einer alternativen Ausführungsform werden die in unterschiedlichen, voneinander unabhängigen Extrudern hergestellten schäumfähigen Schmelzen einer gemeinsamen Kühleinheit zugeführt. Sie passieren diese vor ihrem Eintritt in die Koextrusionsdüse in voneinander getrennten Schmelzekanälen, ohne miteinander in Berührung zu kommen. Die jeweilige Abkühlrate der Einzelströme wird bestimmt durch die Eingangstemperatur, den vorab konstruktiv vorbestimmten Querschnitt des Schmelzekanals und die Verweilzeit der Schmelzen, welche sich über die Drehzahl des jeweiligen Extruders oder eine zusätzlich vorgesehene Schmelzepumpe steuern läßt.

Die Erfindung wird nachfolgend anhand von Ausführungsbeispielen in der Zeichnung näher erläutert. Es zeigen:
- Figur 1: in schematisierter Darstellung den Aufbau einer erfindungs- gemäßen Extrusionsanlage,
- Figur 2: in schematisierter Darstellung den Aufbau einer weiteren erfin- dungsgemäßen Extrusionsanlage,
- Figur 3: in schematisierter Darstellung einen Schnitt durch ein Kühl- aggregat gemäß Darstellung in Figur 2,
- Figur 4: eine weitere Ausführungsform eines Kühlaggregates in einer ge- genüber der Darstellung in Figur 3 um 90° gedrehten Ansicht,
- Figur 5: in perspektivischer Darstellung eine Verpackungsschale,
- Figur 6: einen Schnitt durch die Verpackungsschale gemäß Figur 5,
- Figur 7: in vergrößerter Darstellung eine weitere Einzelheit des Schnitts gemäß Figur 6.

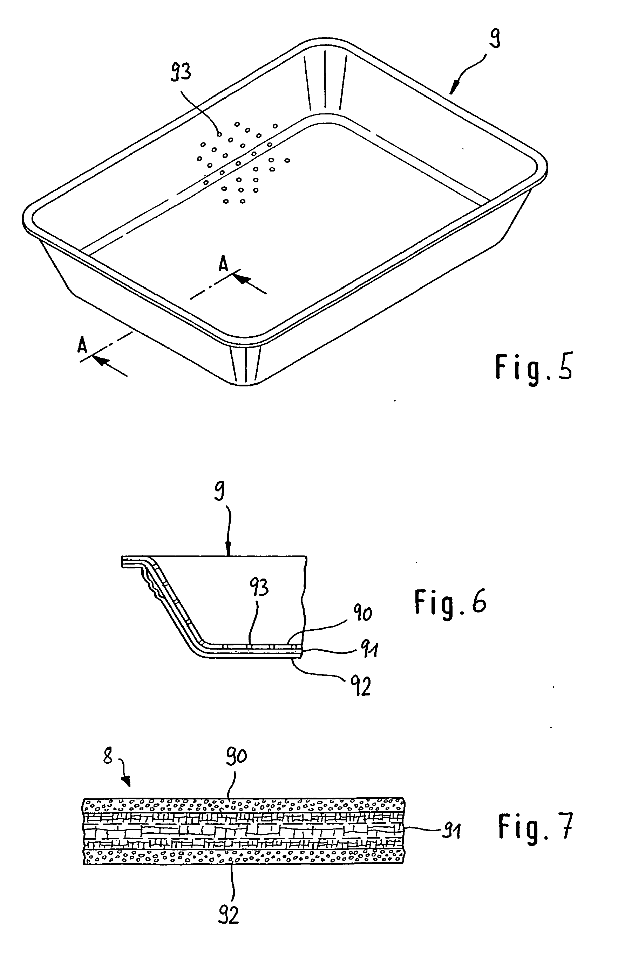

In den Figuren 5 bis 7 ist eine Verpackungsschale beispielsweise zur Verpackung von Frischfleisch dargestellt die allgemein mit Bezugsziffer 9 gekennzeichnet ist. Die Verpackungsschale 9 ist aus einer hier drei Schaumkunststoffschichten 90, 91, 92 aufweisenden Folie in an sich bekannter Weise im Tiefziehverfahren hergestellt. Die beiden äußeren Schaumkunststoffschichten 90, 92 sind, wie insbesondere auch aus der vergrößerten Darstellung in Figur 7 ersichtlich, geschlossenzellig ausgebildet, wodurch sie für Flüssigkeiten undurchlässig sind und auch solche Flüssigkeiten nicht absorbieren.

Die zwischen den beiden geschlossenzelligen Schaumkunststoffschichten 90, 92 angeordnete weitere innere Schaumkunststoffschicht 91 hingegen weist eine offenzellige Schaumstruktur auf, so daß sie für Flüssigkeiten zugänglich ist und insbesondere derartige Flüssigkeiten absorbieren kann.

Somit ist es mit der dargestellten Schale 9 möglich, aus dem zu verpackenden Gut austretende Flüssigkeit innerhalb der absorbierenden offenzelligen Schaumkunststoffschicht 91 aufzunehmen, wozu die obere geschlossenzellige Schaumkunststoffschicht 90 eine Vielzahl von Perforationen 93 aufweist, durch welche in die Schale austretende Flüssigkeit bis in die absorbierende offenzellige Schaumkunststoffschicht 91 hindurchtreten und dort absorbiert werden kann.

Die solchermaßen ausgebildete Verpackungsschale ist zu Zwecken der leichteren Entsorgung vorteilhaft aus einem einzigen Kunststoff als Ausgangsmaterial hergestellt, beispielsweise Polypropylen, Polyethylen, Polystyrol oder Polyester. Sie kann aber auch mit Schichten aus unterschiedlichen Kunststoffen gebildet sein.

Zur Herstellung der für die Ausformung der Verpackungsschale 9 dienenden Folie mit zwei äußeren geschlossenzelligen Schaumkunststoffschichten 90, 92 und einer dazwischen angeordneten inneren offenzelligen Schaumkunststoffschicht 91 war es bislang notwendig, die einzelnen Schichten in separaten Arbeitsgängen herzustellen und sodann zu der hier dreischichtigen Folie durch Laminieren oder Kalandrieren zu verbinden und nachfolgend zu den Verpackungsschalen 9 auszuformen.

Mit den nachfolgend dargestellten Extrusionsanlagen ist es hingegen möglich, in einem einzigen Koextrusionsarbeitsgang eine dreischichtige Folie der in der Figur 7 gezeigten Art herzustellen, die über einzelne Schaumkunststoffschichten unterschiedlicher Zellstruktur und Morphologie sowie weiteren Eigenschaften verfügt, insbesondere Schaumkunststoffschichten 90, 92, die geschlossenzellig und weiteren Schaumkunststoffschichten 91, die beispielsweise offenzellig ausgebildet sind.

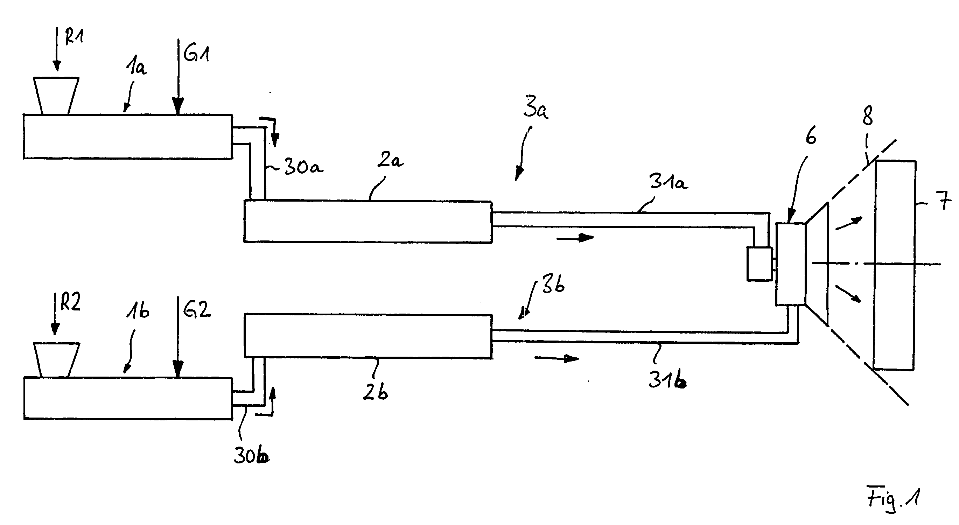

Die hierzu eingesetzte und aus der Figur 1 schematisch ersichtliche Vorrichtung weist für jede einzelne herzustellende Schaumkunststoffschicht einen separaten Extruder auf, wobei in den nachfolgenden Darstellungen der Einfachheit halber nur zwei Extruder 1a, 1b zur Herstellung von dementsprechend zwei Schaumkunststoffschichten der Folie dargestellt sind.

Es versteht sich jedoch, daß beispielsweise zur Ausbildung einer gemäß den Darstellungen in Figur 6 und 7 aus drei Schaumkunststoffschichten 90, 91, 92 bestehenden Folie entsprechend auch drei separate Extruder und ihre nachfolgend noch erläuterten weiteren nachgeschalteten Anlagenteile vorgesehen sein können oder aber gleich aufgebaute Schichten aus einem Extruder stammen.

In jedem Extruder 1 a, 1b wird eine entsprechende Rezeptur R1 bzw. R2 eines thermoplastischen Kunststoffes in an sich bekannter Weise aufgeschmolzen und mit einem chemischen oder physikalischen Treibmittel entsprechend einer wiederum individuellen Rezeptur G1, G2 begast, so daß am Austritt der Extruder 1a, 1b jeweils eine schäumfähige Schmelze in einen jeweiligen Schmelzekanalabschnitt 30a, 30b eintritt.

Dieser Schmelzekanalabschnitt 30a, 30b ist Teil eines jeweils zu einer Koextrusionsdüse 6 führenden Schmelzekanals 3a, 3b, in welchem die aus den jeweiligen Extrudern 1a, 1b stammenden schäumfähigen Schmelzen getrennt voneinander bis zur Koextrusionsdüse 6 geführt werden.

Jeder Schmelzekanal 3a, 3b zur Führung der in den jeweiligen Extrudern 1a, 1b unabhängig voneinander hergestellten schäumfähigen Schmelzen umfaßt ferner einen Kühlextruder 2a, 2b, deren Kühlleistung unabhängig voneinander regelbar ist. Innerhalb der Kühlextruder 2a, 2b erfahren die zuvor von den Extrudern 1a, 1b erzeugten schäumfähigen Schmelzen eine individuell einstellbare Abkühlung und Temperierung und treten aus den jeweiligen Kühlextrudern 2a, 2b in die jeweiligen Abschnitte 31 a, 31 b der Schmelzekanäle 3a, 3b ein. Diese Schmelzekanalabschnitte 31 a, 31 b münden schließlich in der Koextrusionsdüse 6, die im in der Figur 1 dargestellten Ausführungsbeispiel als Runddüse ausgebildet ist.

Innerhalb der Koextrusionsdüse 6 werden die getrennt voneinander zugeführten und unterschiedliche Temperierung aufweisenden Schmelzeströme zu einem rohrförmigen Strang ausgeformt und entsprechend der gewünschten Schichtenreihenfolge aufeinandergelegt und treten nachfolgend gemäß der durch Pfeile symbolisierten Austrittsrichtung aus der Extrusionsdüse 6 aus, wobei eine aus mehreren Schichten, hier zwei Schichten, bestehende Folie 8 unmittelbar gebildet wird.

In an sich bekannter Weise schäumen die schäumfähigen Schmelzen beim Austritt aus der Koextrusionsdüse 6 aufgrund des dann eintretenden Druckabfalls auf Atmosphärend ruck auf und es stellt sich der entsprechend der in den Kühlextrudern 2a, 2b eingestellten Schmelzetemperatur gewünschte strukturelle Aufbau der einzelnen Schaumkunststoffschichten ein.

Auf diese Weise ist es möglich, beispielsweise die aus der Figur 7 ersichtlichen unterschiedlichen Strukturen, nämlich offenzellige Schaumkunststoffschichten 91 und geschlossenzellige Schaumkunststoffschichten 90 bzw. 92 in einer gemeinsamen Koextrusionsdüse 6 auszubilden.

Der Darstellung gemäß Figur 1 ist ferner entnehmbar, daß die aus der Koextrusionsdüse 6 austretende Folie 8 nachfolgend z. B. über einen gekühlten Dorn 7 gezogen und entsprechend kalibriert und nachfolgend in an sich bekannter Weise zur einer mehrschichtigen Folie aufgeschnitten werden kann die sodann z. B. zu der in der Figur 5 dargestellten Verpackungsschale 9 verformt werden kann.

Wesentliches Merkmal der in der Figur 1 dargestellten Vorrichtung ist es, daß eine der Anzahl Schaumkunststoffschichten entsprechende Anzahl Extruder 1 a, 1b vorgesehen ist, deren erzeugte schäumfähige Schmelze nachfolgend einem eigenen Kühlextruder 2a, 2b zugeführt wird und sodann die individuell in den Kühlextrudern 2a, 2b temperierten und zuvor mit einer individuellen Rezeptur in den Extrudern 1a, 1b bereitgestellten thermoplastischen schäumfähigen Schmelzen getrennt voneinander der Koextrusionsdüse 6 zugeführt werden, wo sie unmittelbar vor der Austrittsöffnung derselben aufeinandergelegt und sodann sofort zu der gewünschten mehrschichtigen Folie mit Schaumkunststoffschichten unterschiedlichen Eigenschaftsprofils ausgeformt werden.

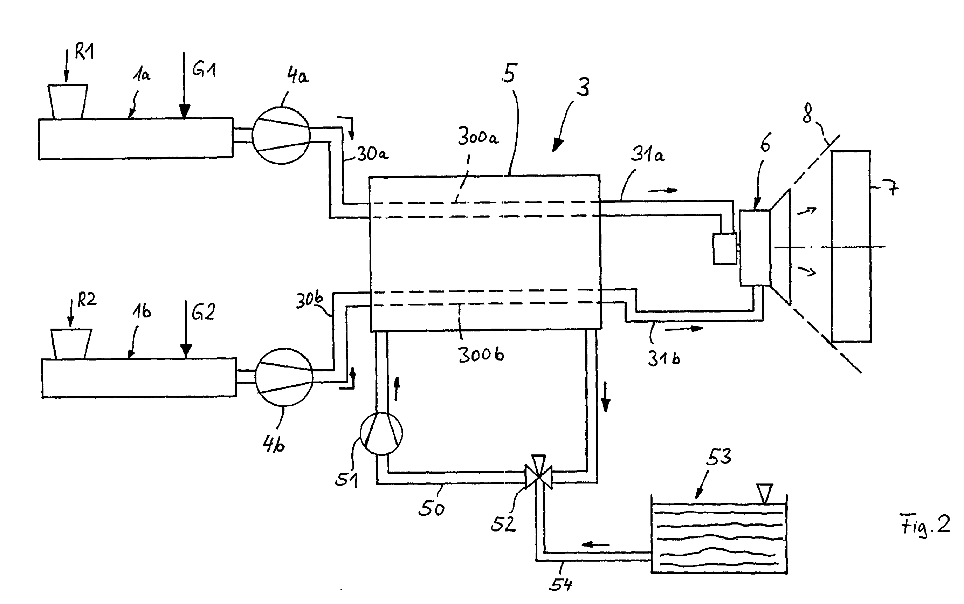

Eine alternative Ausführungsform der zur Herstellung einer mehrschichtigen Folie mit unterschiedlich ausgebildeten Schaumkunststoffschichten geeigneten Vorrichtung ist in der Figur 2 dargestellt.

Während im Ausführungsbeispiel gemäß Figur 1 zu den Extrudern 1a, 1b in eben solcher Anzahl nachgeschaltete Kühlextruder 2a, 2b vorgesehen sind, umfaßt die in der Figur 2 dargestellte Vorrichtung eine entsprechende Anzahl an Extrudern 1a, 1b, jedoch nur eine gemeinsame Kühleinrichtung in Gestalt eines nachfolgend noch näher erläuterten Kühlaggregates 5.

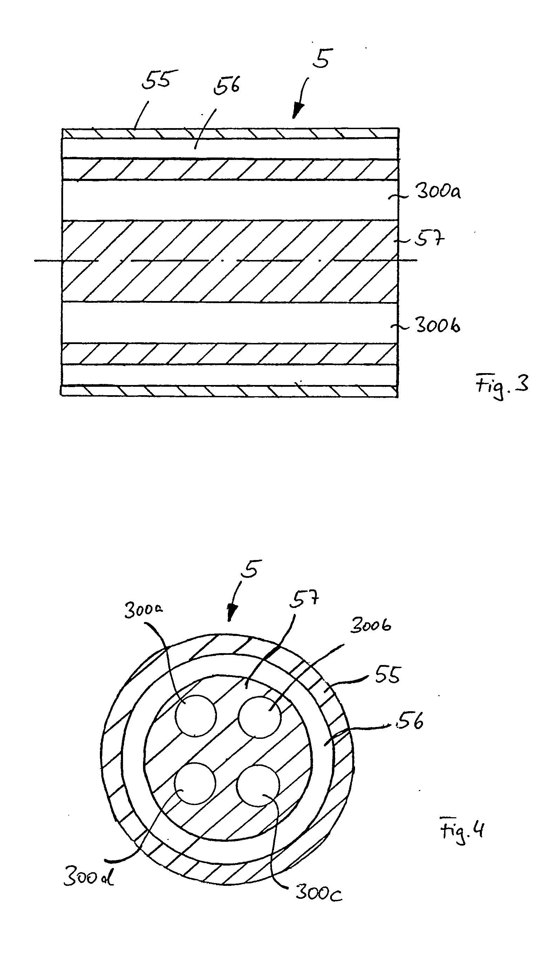

Wie auch schon im Ausführungsbeispiel gemäß Figur 1 beschrieben, werden zunächst schäumfähige Schmelzen mit unterschiedlichen Rezepturen R1, R2 sowie Treibmitteln G1, G2 in den einzelnen Extrudern 1a, 1b unabhängig voneinander hergestellt und sodann unter Förderung von fakultativ vorgesehenen nachgeschalteten Schmelzepumpen 4a, 4b in die jeweiligen Leitungsabschnitte 30a, 30b der getrennten Schmelzekanäle eingespeist. Diese Leitungsabschnitte 30a, 30b führen zu dem in weiteren Einzelheiten auch aus der Figur 3 ersichtlichen Kühlaggregat 5.

Das Kühlaggregat 5 wird mittels eines in einer Leitung 50 unter Zwangsförderung mittels eines Pumpe 51 zirkulierenden Kühlmittelkreislauf durchspült und weist hierzu einen innerhalb des Außenmantels 55 des Kühlaggregates 5 vorgesehenen und vom Kühlmittel durchströmbaren Kühlmantel 56 auf. Die Temperierung des im Kreislauf 50 und Kühlmantel 56 zirkulierenden Kühlmittels erfolgt über ein Kühlmittelmischventil 52, welches zur Konstanthaltung einer gewünschten Temperatur Kühlmedium aus einem Reservoir 53 über eine Zuführleitung 54 in den Kühlkreislauf nachzuspeisen vermag.

Durch das solchermaßen gekühlte Kühlaggregat 5 führen ferner Schmelzekanalabschnitte 300a, 300b, welche die jeweiligen Schmelzekanalabschnitte 30a, 30b von den einzelnen Extrudern 1a, 1b fortsetzen, wobei diese Schmelzekanalabschnitte 300a, 300b zwar gemeinsam durch das Kühlaggregat 5 verlaufen, jedoch strikt räumlich voneinander getrennt sind, so daß keine gegenseitige Beeinflussung der in den jeweiligen Abschnitten 300a, 300b geführten schäumfähigen Schmelzen erfolgen kann. Nachfolgend des Kühlaggregates 5 führen wiederum die Schmelzekanalabschnitte 31a, 31b die jeweiligen schäumfähigen Schmelzen getrennt voneinander dem Koextrusionswerkzeug 6 zu, wo sie in analoger Weise zum Ausführungsbeispiel gemäß Figur 1 zu der mehrschichtigen Folie 8 mit unterschiedlichen Schaumkunststoffschichten extrudiert wird.

Auch bei Ausbildung eines gemeinsamen Kühlaggregates 5 gemäß Ausführungsbeispiel in Figur 2 wird jedoch eine unterschiedlich starke Abkühlung der einzelnen in den Extrudern 1a, 1b hergestellten schäumfähigen Schmelzen erreicht, indem die jeweiligen Massendurchsätze der jeweiligen schäumfähigen Schmelzen durch das Kühlaggregat 5 pro Zeiteinheit unterschiedlich eingeregelt werden, so daß auch die entsprechende Abkühlung der schäumfähigen Schmelzen unterschiedlich stark ausfällt und sich demzufolge unterschiedliche Temperaturen in den Schmelzekanalabschnitten 31a, 31b einstellen. Dieser unterschiedliche Massendurchsatz pro Zeiteinheit kann beispielsweise durch Variation der zur Verfügung stehenden Querschnitte in den Leitungskanalabschnitten 300a, 300b wie auch durch die jeweilige Leistung der Extruder 1 a, 1 b bzw. Schmelzepumpen 4a, 4b eingestellt werden.

Somit können auch in diesem Ausführungsbeispiel gemäß Figur 2 der Koextrusionsdüse 6 schäumfähige Schmelzen unabhängig voneinander zugeführt werden, die ein unterschiedliches Temperaturniveau und unterschiedliche Rezepturen aufweisen, so daß in der letztlich erhaltenen mehrschichtigen Folie 8 unterschiedliche Schaumstrukturen der einzelnen Schaumkunststoffschichten erhalten werden können.

Es versteht sich, daß neben den in den Figuren 1 und 2 dargestellten Ausführungsformen zur Extrusion einer Folie 8 mit lediglich zwei Schaumkunststoffschichten auch mehr solcher Schaumkunststoffschichten zu einer Folie extrudiert werden können, wobei sich dann die Anzahl an Extrudern sowie Schmelzekanälen für die getrennte Zuführung der schäumfähigen Schmelzen zur gemeinsamen Koextrusionsdüse 6 entsprechend erhöht. Demzufolge zeigt die Darstellung in Figur 4 beispielsweise ein gemeinsames Kühlaggregat 5, welches über insgesamt vier Schmelzekanalabschnitte 300a, 300b, 300c, 300d verfügt, die allesamt innerhalb eines Kernmaterials 57 thermisch voneinander getrennt und über den Kühlmantel 56 abgekühlt werden, so daß die gewünschten unterschiedlichen Eigenschaftsprofile der letztlich innerhalb der Folie 8 erhaltenen Schaumkunststoffschichten erzielbar sind.

Insbesondere bieten die vorangehend erläuterten Vorrichtungen die Möglichkeit, durch entsprechende Wahl der Rezepturen in den einzelnen Extrudern und nachfolgend bewirkte unterschiedlich starke Abkühlung der jeweils erzeugten schäumfähigen Schmelzen unter Einsatz nur einer einzigen Koextrusionsdüse eine mehrschichtige Folie herzustellen, in welcher die einzelnen Schaumkunststoffschichten stark voneinander abweichende Eigenschaften aufweisen, z. B. indem einige Schaumkunststoffschichten geschlossenzellig, andere Schaumkunststoffschichten jedoch offenzellig ausgebildet sind, hinsichtlich ihrer Dichte und Morphologie sich stark voneinander unterscheiden, etc.

### Ausführungsbeispiel:

Hergestellt wurde eine dreischichtige, bahnförmige Koextrusionsschaumfolie des Schichtenaufbaus A-B-A, die dadurch gekennzeichnet ist, daß in voneinander unabhängigen Extrudern A und B zwei verschiedene, sich sowohl hinsichtlich Rezeptur als auch der Prozeßführung unterscheidende schäumfähige Schmelzen auf der Basis von Polystyrol erzeugt wurden, die in Tabelle 1 angegeben sind.

Dabei ist die schäumfähige Schmelze A gekennzeichnet durch geschlossenzellige Schaumstruktur und Einfärbung. Schmelze B ist durch offenzellige Schaumstruktur gekennzeichnet und mittels eines zugesetzten Benetzungsmittels absorptionsfäh ig für polare Flüssigkeiten.

Die so koextrudierte Schaumfolie A-B-A wurde anschließend im Thermoformverfahren zu einem Behälter für Lebensmittel weiterverarbeitet.

In beiden Extrudern wurden die jeweiligen Schmelzen voneinander unabhängig plastifiziert und in jede Schmelze wurde ein Treibmittel injiziert und eingemischt, um schäumfähige Schmelzen zu erhalten.

Nach dem Austritt der solchermaßen schäumfähigen Schmelzen aus dem jeweiligen Extruder A und B wurden die beiden Schmelzen jeweils unabhängig voneinander einem dem jeweiligen Extruder A bzw. B in Tandemanordnung nachgeschalteten Kühlextruder zugeführt und in diesen Kühlextrudern von der für das Einmischen des Treibmittels erforderlichen Temperatur auf unterschiedliche Temperaturen zur Weiterverarbeitung abgekühlt. Die jeweilige Temperatur wurde dabei nach der vorgesehenen Schaummorphologie und der erforderlichen Schmelzestabilität festgelegt. Von dort wurden die abgekühlten schäumfähigen Schmelzen separat einer Koextrusionsdüse zugeführt.

Erst unmittelbar vor dem Formgebungsprozeß wurden beide Schmelzen in der auf die Schmelzeführung und die vorgesehene Schichtdickenverteilung angepaßten Koextrusionsrunddüse zusammengeführt, zu einem schlauchförmigen Schmeizeverbund mit der Schichtstruktur A-B-A geformt und bei Austritt aus der Koextrusionsdüse verschäumt.

In bekannter Weise wurde die so erzielte Koextrusionsschaumfolie anschließend kalibriert, geschnitten, flachgelegt, abgezogen und aufgewickelt. Nach einer Lagerungszeit von drei Tagen wurde im Thermoformverfahren aus der Schaumfolie eine Lebensmittelverpackung hergestellt.

Die Innenseite A der Lebensmittelverpackung wurde perforiert und der so erhaltene Behälter wurde zur Verpackung von flüssigkeitsabgebenden Lebensmitteln verwendet, wobei die Flüssigkeit die innere perforierte Schicht A durchdringt und von der Schicht B aufgenommen wird. Ein Austreten der Flüssigkeit wird durch die äußere Schicht A, die nicht perforiert und geschlossenzellig ist, verhindert. Die einzelnen Schichten waren homogen und haftfest miteinander verbunden.

**Tabelle 1**

| | Schmelze A | Schmelze B |
|---|---|---|
| Rohstoffanteil Polystyrol - Frischmaterial | 80 % | 60 % |
| Anteil Polystyrol - Rezyklat | 19,1 % | 36,9 % |
| Nukleierungsmittel auf Basis von Natrium-bikarbonat und Zitronensäure als Batch mit 40 % Wirkstoffkonzentration | 0,4 % | 0,6 % |
| Farbkonzentrat als Masterbatch | 0,5 % | ----- |
| LDPE | ---- | 1,0 % |
| Alkansulfonat als Benetzungsmittel in Batchform | ----- | 1,5% 1,5 % |
| | | |
| Treibmittelzusatz n-Butan | 3,5 % | |
| Treibmittelzusatz iso-Butan | | 3,8 % |
| | | |
| Schmelzetemperatur vor Eintritt in das Werkzeug | 130°C | 162°C |
| | | |
| Massedurchsatz | 105 kg/h | 125 kg/h |
| | | |
| Schichtstärke in der Koextrusionsschaum-folie (vor Thermoformen) | 1,0 mm + 1,5 mm | 2,5 mm (+/- 0,5 mm) |

## Patentansprüche

1. Verfahren zur Herstellung einer aus mindestens zwei Schaumkunststoffschichten bestehenden Folie, bei welchem zur Ausbildung jeder Schaumkunststoffschicht der Folie zunächst ein thermoplastischer Kunststoff in einem jeweiligen Extruder aufgeschmolzen und mit einem chemischen oder physikalischen Treibmittel begast wird und nachfolgend die solchermaßen hergestellten schäumfähigen Schmelzen separat einer gemeinsamen Koextrusionsdüse zugeführt werden, aus der sie gemeinsam unter Aufschäumung zu der Folie koextrudiert werden, **dadurch gekennzeichnet, daß** jede schäumfähige Schmelze nach ihrem Austritt aus dem jeweiligen Extruder und vor ihrem Eintritt in die Koextrusionsdüse einen Abkühlschritt durchläuft, in welchem die schäumfähigen Schmelzen unabhängig voneinander auf vorbestimmte Temperaturen abgekühlt werden und die solchermaßen abgekühlten schäumfähigen Schmelzen in der Koextrusionsdüse unmittelbar aufeinandergefügt und bei ihrem Austritt aus der Koextrusionsdüse aufgeschäumt werden.

2. Verfahren nach Anspruch 1, **dadurch gekennzeichnet, daß** zur Ausbildung der Abkühlschritte für jede schäumfähige Schmelze ein Kühlaggregat vorgesehen ist, dessen Kühlleistung in Abhängigkeit von der gewünschten Temperatur der jeweiligen schäumfähigen Schmelze geregelt wird.

3. Verfahren nach Anspruch 1, **dadurch gekennzeichnet, daß** zur Ausbildung der Abkühlschritte ein gemeinsames Kühlaggregat vorgesehen ist, durch welches die schäumfähigen Schmelzen gemeinsam geführt werden und der Grad der Abkühlung der jeweiligen schäumfähigen Schmelzen durch Variation des Massendurchsatzes der jeweiligen schäumfähigen Schmelzen durch das Kühlaggregat pro Zeiteinheit geregelt wird.

4. Verfahren nach einem der Ansprüche 1 bis 3, **dadurch gekennzeichnet, daß** Schaumkunststoffschichten mit geschlossenen oder offenen Zellen hergestellt werden.

5. Verfahren nach Anspruch 4, **dadurch gekennzeichnet, daß** eine Folie mit mindestens einer offenzelligen und mindestens einer geschlossenzelligen Schaumstoffschicht hergestellt wird.

6. Verfahren nach einem der Ansprüche 1 bis 5, **dadurch gekennzeichnet, daß** die Folie auf Basis thermoplastischer Kunststoffe, wie Polyethylen, Polypropylen, Polystyrol oder eine Polyesters hergestellt wird.

7. Vorrichtung zur Herstellung einer aus mindestens zwei Schaumkunststoffschichten bestehenden Folie, umfassend eine der Anzahl an voneinander verschiedenen Schaumkunststoffschichten entsprechende Anzahl Extruder zur Ausbildung schäumfähiger Schmelzen sowie eine den Extrudern nachgeordnete Koextrusionsdüse, die mit den Extrudern über jeweilige separate Schmelzekanäle verbunden ist und mittels derer die Folie aus den jeweiligen schäumfähigen Schmelzen koextrudierbar ist, **dadurch gekennzeichnet, dass** jeder Schmelzekanal einen Kühlabschnitt aufweist, in welchem die aus den Extrudern austretenden schäumfähigen Schmelzen auf vorbestimmbare Temperaturen abkühlbar sind und die Schmelzekanäle separat voneinander mit der Koextrusionsdüse kommunizieren und die Koextrusionsdüse derart ausgebildet ist, dass die schäumfähigen Schmelzen in der Koextrusionsdüse unmittelbar aufeinander gefügt werden

8. Vorrichtung nach Anspruch 7, **dadurch gekennzeichnet, daß** der Kühlabschnitt jedes Schmelzekanals von einem unabhängig regelbaren Kühlextruder oder Wärmetauscher gebildet ist.

9. Vorrichtung nach Anspruch 7, **dadurch gekennzeichnet, daß** der Kühlabschnitt von einem gemeinsamen Kühlaggregat gebildet ist, durch welches die Schmelzekanäle getrennt voneinander hindurchgeführt sind.

10. Vorrichtung nach einem der Ansprüche 7 bis 9, **dadurch gekennzeichnet, daß** die Koextrusionsdüse als Rund- oder Flachdüse ausgebildet ist.

11. Vorrichtung nach einem der Ansprüche 7 bis 10, **dadurch gekennzeichnet, daß** in den Schmelzekanälen Schmelzepumpen zur Förderung der schäumfähigen Schmelzen angeordnet sind.

## Claims

1. Method for producing a film made of at least two plastics foam layers, in which to form each plastics foam layer of the film, firstly a thermoplastic plastics material is melted in a respective extruder and is gassed with a chemical or physical blowing agent and the foamable melts thus produced are then supplied separately to a common coextrusion nozzle, from which they are coextruded together, while foaming, to the film, **characterised in that** each foamable melt, after leaving the respective extruder and before entering the coextrusion nozzle runs through a cooling step, in which the foamable melts are cooled independently of one another to predetermined temperatures and the foamable melts which have been cooled in this manner are joined directly to one another in the coextrusion nozzle and are foamed on leaving the coextrusion nozzle.

2. Method according to claim 1, **characterised in that** to form the cooling steps for each foamable melt, a cooling assembly is provided, the cooling power of which is controlled as a function of the desired temperature of the respective foamable melt.

3. Method according to claim 1, **characterised in that** to form the cooling steps, a common cooling assembly is provided, through which the foamable melts are guided together and the degree of cooling of the respective foamable melts is controlled by varying the mass throughput of the respective foamable melts through the cooling assembly per time unit.

4. Method according to any one of claims 1 to 3, **characterised in that** the plastic foam layers are produced with closed or open cells.

5. Method according to claim 4, **characterised in that** a film with at least one open-cell and at least one closed-cell foam layer is produced.

6. Method according to any one of claims 1 to 5, **characterised in that** the film is produced based on thermoplastic plastics materials, such as polyethylene, polypropylene, polystyrene or a polyester.

7. Device for producing a film made of at least two plastics foam layers, comprising a number of extruders corresponding to the number of plastics foam layers which differ from one another to form foamable melts, and a coextrusion nozzle arranged downstream of the extruders and connected to the extruders by respective separate melt channels and by means of which the film can be coextruded from the respective foamable melts, **characterised in that** each melt channel has a cooling portion in which the foamable melts leaving the extruders can be cooled to predeterminable temperatures and the melt channels communicate separately from one another with the coextrusion nozzle and the coextrusion nozzle is configured in such a way that the foamable melts are directly joined to one another in the coextrusion nozzle.

8. Device according to claim 7, **characterised in that** the cooling portion of each melt channel is formed by an independently controllable cooling extruder or heat exchanger.

9. Device according to claim 7, **characterised in that** the cooling portion is formed by a common cooling assembly, through which the melt channels are guided separately from one another.

10. Device according to any one of claims 7 to 9, **characterised in that** the coextrusion nozzle is formed as a round or flat nozzle.

11. Device according to any one of claims 7 to 10, **characterised in that** melt pumps to convey the foamable melts are arranged in the melt channels.

## Revendications

1. Procédé de préparation d'une feuille consistant en au moins deux couches en mousse synthétique, dans lequel pour la formation de chaque couche en mousse synthétique de la feuille, une matière thermoplastique est d'abord fondue dans une extrudeuse individuelle et gazée à l'aide d'un porogène chimique ou physique et ensuite, les masses fondues moussables ainsi préparées sont alimentées séparément par une filière de coextrusion, de laquelle elles sont coextrudées avec moussage en de feuille, **caractérisé en ce que** chaque masse fondue moussable parcourt après sa sortie de chaque extrudeuse et avant son entrée dans la filière de coextrusion, une étape de refroidissement, dans laquelle les masses fondues moussables sont indépendamment refroidies à des températures déterminées et les masses fondues moussables ainsi refroidies sont empilées directement dans la filière de coextrusion et moussées à la sortie de la filière de coextrusion.

2. Procédé selon la revendication 1, **caractérisé en ce que** pour la réalisation de l'étape de refroidissement pour chaque masse fondue moussable, un appareil de refroidissement est prévu, dont la conduite de refroidissement est réglée en fonction de la température souhaitée de chaque masse fondue moussable.

3. Procédé selon la revendication 1, **caractérisé en ce que** pour la réalisation de l'étape de refroidissement, un appareil de refroidissement commun est prévu, par lequel les masses fondues moussables sont alimentées de manière commune et le taux de refroidissement de chaque masse fondue moussable est réglé par variation du débit massique de chaque masse fondue moussable dans l'appareil de refroidissement.

4. Procédé selon l'une des revendications 1 à 3, **caractérisé en ce que** les couches en mousse synthétique sont préparées avec des cellules fermées ou ouvertes.

5. Procédé selon la revendication 4, **caractérisé en ce que** l'on prépare une feuille avec au moins une couche en mousse à cellules ouvertes et au moins une couche en mousse à cellules fermées.

6. Procédé selon l'une des revendications 1 à 5, **caractérisé en ce que** la feuille est préparée à base de matières thermoplastiques, comme le polyéthylène, le polypropylène, le polystyrène ou un polyester.

7. Dispositif pour la préparation d'une feuille consistant en au moins deux couches en mousse synthétique, comprenant un nombre d'extrudeuses correspondant au nombre des différentes couches en mousse synthétique, pour la formation de masses fondues moussables, ainsi qu'une filière de coextrusion suivant les extrudeuses, qui est reliée aux extrudeuses par des canaux individuels séparés de masse fondue et à l'aide de laquelle on peut coextruder la feuille à partir des différentes masses fondues moussables, **caractérisé en ce que** chaque canal de masse fondue présente un segment de refroidissement, dans lequel les masses fondues moussables sortant des extrudeuses peuvent être refroidies à des températures prédéterminables, **en ce que** les canaux de masse fondue communiquent séparément les uns des autres, avec la filière de coextrusion, et **en ce que** la filière de coextrusion est formée de sorte que les masses fondues moussables sont empilées les unes sur les autres directement dans la filière de coextrusion.

8. Dispositif selon la revendication 7, **caractérisé en ce que** le segment de refroidissement de chaque canal de masse fondue est formé d'une extrudeuse de refroidissement ou d'un échangeur de chaleur, réglable indépendamment.

9. Dispositif selon la revendication 7, **caractérisé en ce que** le segment de refroidissement est formé d'un appareil de refroidissement commun, à travers duquel les canaux de masse fondue passent séparément les uns des autres.

10. Dispositif selon l'une des revendications 7 à 9, **caractérisé en ce que** la filière de coextrusion à la forme d'une filière ronde ou plate.

11. Dispositif selon l'une des revendications 7 à 10, **caractérisé en ce que** dans les canaux de masse fondue, sont agencés des pompes de masse fondue pour accélérer les masses fondues moussables.
